# EUROPEAN PATENT APPLICATION

(11) **EP 2 754 987 A1**
(43) Date of publication of application: **16.07.2014**
(21) Application number: 13150788.1
(22) Date of filing: 10.01.2013
(51) Int. Cl.: F28D 7/00, E03F 3/04, F28D 7/02

(54) **Pipe, pipeline section and pipeline**

(71) Applicant: Heijmans Civiel B.V., 5248 JT Rosmalen (NL); Socea NV, 2520 Oelegem (BE); Frank GmbH, 64546 Mörfelden-Walldorf (DE)
(72) Inventor: Henzen, Willem Johannes, 3921 DT Elst (NL); Ham, Robertus Petrus Wilhelmus, 5298 AC Liempde (NL); Kippers, Mannes, 7461 GM Rijssen (NL); Simons, Peter, 2820 Bonheiden (BE); van Arnhem, Johannes Dirk, 4002 GB Tiel (NL)
(74) Representative: Nederlandsch Octrooibureau

(57) **Abstract**

The invention relates to pipes for transporting a liquid, wherein a pipe comprises an inner shell and an outer shell which is coaxial with respect to the inner shell, wherein the inner shell of the pipe is provided with a heat exchanger for transferring heat from the first liquid in the pipe to a second liquid in the heat exchanger, wherein the heat exchanger is provided with a first connection and a second connection for transporting the second liquid.

The invention also relates to a pipeline section composed of such pipes and to a pipeline composed of such pipeline sections.

## Description

The invention relates to a pipe, a pipeline section and a pipeline for transporting a liquid.

Pipelines of this type composed of pipeline sections which are in turn composed of pipes are used, inter alia, for transporting waste water in sewage systems, for example, which can be laid in the ground or under roads and can also be used for recovering heat from the waste water. Such a pipe is known, inter alia, from WO2005/078369.

The known pipe comprises a heat exchanger which is arranged around the pipe. The heat exchanger comprises a helical tube. The heat exchanger can be used for transferring heat from a liquid flowing through the pipe to a second liquid which is conducted through the heat exchanger.

A pipeline comprising pipeline sections which are assembled from the pipes provided with the heat exchangers can be used, for example, for recovering heat from waste water from houses, buildings and the like.

A drawback of the known pipe, pipeline sections or pipeline is the fragility of the pipes when pushing or drilling the pipes through the ground. A further drawback when laying a pipeline containing a large number of pipeline sections comprising consecutive pipes is that it is necessary to provide a large number of connections between the heat exchangers in the various pipes, which can lead to errors when connecting the heat exchangers to the various pipeline sections and/or pipes.

It is an aim of the invention to provide a pipe, a pipeline section and a pipeline which reduce the fragility of the pipes when drilling or pressing.

According to a first aspect of the invention, this aim is achieved by means of pipes for transporting a first liquid, wherein a pipe comprises an inner shell and an outer shell which is coaxial with respect to the inner shell, wherein the inner shell of the pipe is provided with a heat exchanger for transferring heat from the first liquid in the pipe to a second liquid in the heat exchanger, wherein the heat exchanger is provided with a first connection and a second connection for transporting the second liquid. By arranging the heat exchanger in the inner shell of the pipe, the distance over which the heat is transported from the first liquid to the heat exchanger is reduced. The heat exchanger may comprise a helical plastic tube, for example. The first liquid may comprise waste water from a domestic dwelling, office or factory, for example. Another example of the first liquid is drinking water. The second liquid may comprise water, for example.

A further advantage of this construction of said pipe is that the pressure forces which act on the pipe when it is pushed or drilled through the ground can be conducted through the outer shell of the pipe. The outer shell can be reinforced specifically for conducting said pressure forces.

In addition, the first and the second connection of the heat exchanger can be used to connect the heat exchangers of two or more respective pipes in series or in parallel.

In an embodiment of the pipes, the interior of the inner shell is provided with a plastic coating. By applying the plastic coating, the pipe can be made impermeable to a liquid which is transported through the pipe. The plastic coating also ensures that it is not possible for contaminants from outside the pipe to permeate into the liquid which is transported through the pipe.

In an embodiment of the pipes, the plastic coating and the heat exchanger in a pipe are integrated in a single plastic element. By integrating the heat exchanger and the plastic coating in a single element, it is possible to produce said element in an efficient manner.

In an embodiment of the pipes, the plastic coating can comprise HDPE. HDPE is a high-density plastic which is highly suitable for sealing materials against liquids and makes the pipes resistant to aggressive substances. Pipes with an interior coating of HDPE are suitable, for example, for transporting drinking water.

In an embodiment, the inner shell of a first pipe is provided with a through-pipe for transporting the second liquid to or from a heat exchanger of a second pipe. The through-pipe can be arranged in the pipe in an axial direction. Using the through-pipes in the pipes makes it possible to connect the heat exchangers in consecutive pipes in series or in parallel with one another. The through-pipes offer an advantage when using the pipes in pipeline sections and pipelines, because in practice the number of pipes where the heat exchangers can be connected in series is limited by the flow resistance of the heat exchangers.

In an embodiment, the inner shell and the outer shell comprise concrete. By using moulds and concrete, it is possible to cast a pipe comprising the plastic coating and the helical plastic tube.

In an embodiment, the outer shell of the pipes comprises a reinforcement. The reinforcement can comprise steel bars or a steel cylinder, for example.

In a further embodiment, the pipes are provided with positioning means at the first end and the second end of the pipe, wherein the positioning means are arranged in a fixed position with respect to the first and the second connection for the correct connection of the pipes. Said positioning means enable the pipes to be connected in a fixed correct position with respect to one another, wherein the first and the second connection and the through-pipes are in the same position with respect to one another in each pipe. The positioning means can comprise a recess and projection, for example. By providing projections and the recesses at the first end and the second end of the pipe, it is possible to use said projections and recesses as a reference and fit when assembling pipeline sections by coupling a second end of the first pipe to a first end of the second pipe, wherein the orientation of the first pipe with respect to a second pipe is fixed about an axial axis.

The invention also relates to a pipeline section composed of pipes according to one of Claims 1-9, wherein the heat exchangers of respectively a first and a second pipe are connected in series with one another. By arranging the various through-pipes in a pipe, it is possible for the heat exchangers in the pipes to be coupled in series or in parallel with one another. It is also possible for heat exchangers of the respective pipeline sections in turn to be coupled in series or in parallel with one another. The connections between the pipes can be finished in a liquid-tight manner by means of an HDPE coating and can be completely filled with shrinkage-free mortar.

The invention furthermore relates to a pipeline composed of pipeline sections according to Claim 10, wherein the heat exchangers of a first pipeline section are connected in parallel with the heat exchangers of a second pipeline section. Said pipeline forms a parallel connection consisting respectively of the series connection of the heat exchangers in the first pipeline section and the series connection of the heat exchangers in the second pipeline section. An advantage of this configuration of the heat exchangers in the pipes is that it is possible for the inlet temperature of the liquid at the first end of the heat exchangers to be lower on average than in a series connection of the heat exchangers in the pipes of the assembly. Furthermore, in this configuration of heat exchangers in the pipes, the flow resistance is lower than in the case of a complete series connection of the heat exchangers in the pipes.

The invention also relates to a drill pipe comprising a pipe according to one of Claims 1-9.

The invention also relates to a plastic element, wherein the plastic coating and the helical plastic tube are integrated for use in a pipe according to one of Claims 1-9.

The invention also relates to a device for heating or cooling provided with pipes according to one of Claims 1-9. By connecting the heat exchangers in the pipes in series or in parallel with one another, it is possible to obtain an integrated heat exchanger which can transfer heat along the length of the pipes from the liquid to be transported through the pipe to the second liquid to be conducted through the heat exchanger. By coupling the pipeline composed of such pipes to a device for heating domestic dwellings or buildings, for example, it is for example possible to recover heat from waste water from buildings and domestic dwellings.

Although the invention will be described with reference to a number of preferred embodiments, the invention is not limited thereto. The embodiments to be described are merely examples of possible interpretations of the invention and it will be clear to the person skilled in the art that the advantages of the invention can also be achieved in another way.

The invention will be described below with reference to the attached drawings.

In the figures, identical components are denoted by identical reference numerals.
Fig. 1 shows a cross section in an axial plane of an embodiment of a pipe according to the invention;
Fig. 2 diagrammatically shows a side view of the first end of a pipe;
Fig. 3 diagrammatically shows a cross section in an axial plane of a pipeline section comprising two pipes; and
Fig. 4 diagrammatically shows a pipeline composed of two pipeline sections which each comprise two pipes.

The pipes according to the invention can be used, inter alia, in a pipeline in a sewage system. Heat can be extracted from a first liquid, which is transported through the pipeline, by means of the heat exchangers in the pipes and transported away for further use by means of a second liquid which is conducted through the heat exchanger in the pipe. The first liquid may comprise waste water, for example. The second liquid may comprise water from a heating system, for example. Another application is the use of said pipes in a cooling system for discharging heat from a building to surface water, wherein said pipes form part of a pipeline for transporting water from a river to a water reservoir. By means of the heat exchangers in the pipes, heat from the cooling water in the heat exchangers to the water which is transported through the pipeline can be transported away to the water reservoir for further cooling in the outside air.

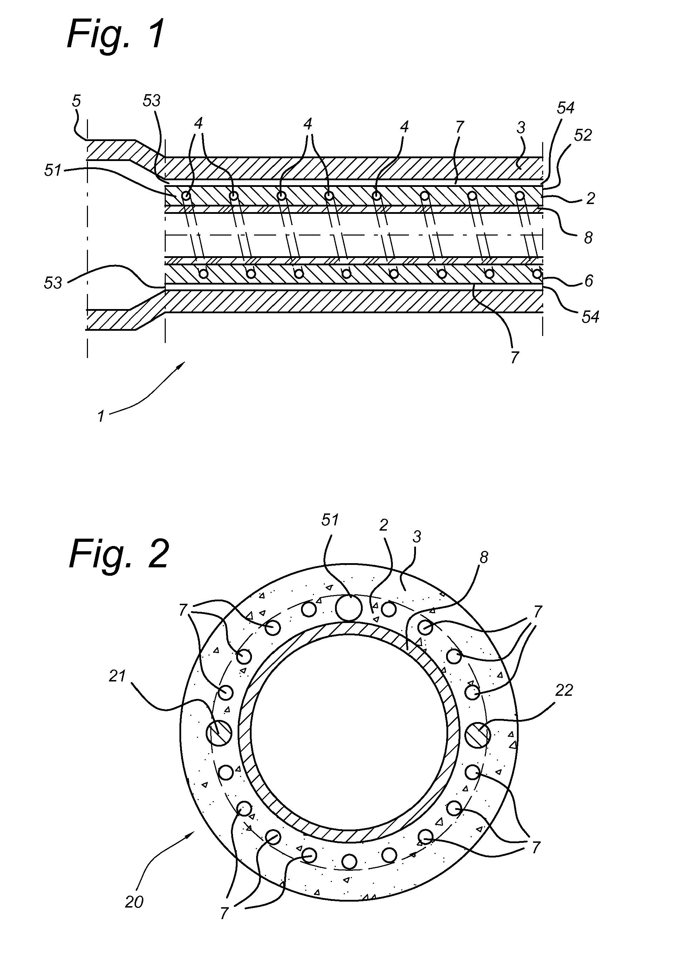

Fig. 1 shows a cross section in an axial plane of an embodiment of a pipe according to the invention. The pipe 1 comprises an inner shell 2 and an outer shell 3 which is coaxial with respect to the inner shell. The interior of the inner shell 2 can be provided with a plastic coating 8. The plastic coating 8 has a thickness of 6 mm, for example. The plastic coating 8 can contain HDPE, for example.

The inner shell 2 of the pipe is also provided with a heat exchanger 4 for transferring heat from a first liquid which can flow through the pipe 1 to a second liquid which can flow through the heat exchanger 4. The heat exchanger 4 may comprise a helical plastic tube which is situated inside the inner shell 2. The helical plastic tube has an internal diameter of 54 mm, for example. The wall of the helical plastic tube is 3 mm thick, for example. The pitch of the helical tube may be 10 to 15 cm, for example. The material of the plastic tube can contain HDPE. The heat exchanger 4 may also be provided with a first connection 51 at a first end 5 of the pipe and a second connection 52 at a second end 6 of the pipe 1.

In an embodiment of the pipe, the second connection 52 can be arranged at the first end 5 of the pipe.

An advantage of using HDPE for both the plastic coating and the heat exchanger is that the plastic coating and the helical plastic tube can be integrated in a single element by means of extrusion.

In an embodiment of the pipe according to the invention, the inner shell 2 and the outer shell 3 of the pipe can be integrally produced from concrete, for example C40/C50 concrete.

The pipes can be manufactured by placing the plastic coating and the helical plastic tube of the heat exchanger into a mould and subsequently filling the mould with concrete, for example C40/C50 concrete. In alternative embodiments, it is possible to use Thiocrete, as supplied by Shell, or polymer concrete for manufacturing the pipes instead of concrete.

In an embodiment of the pipe 1, the outer shell 3 of the pipe 1 can comprise a reinforcement, for example steel bars arranged in an axial direction in the outer shell. The reinforcement can also be embodied by means of a steel cylinder arranged coaxially in the outer shell of the pipe.

The external diameter of the pipe may be 2.16 m, for example. The inner diameter can be 1.60 m, for example. The length of a pipe may be 3.30 m, for example.

An embodiment of the pipe 1 according to the invention is provided with a through-pipe 7 which may be arranged in an axial direction in the inner shell 2. Said through-pipe 7 may be made of polyethylene. In another embodiment, further through-pipes 7 can be arranged in the inner shell 2, as shown in Fig. 2. Said through-pipes 7 can be arranged in an axial direction. The further through-pipes 7 can also be made of polyethylene and have an external diameter of 50 mm, for example. The through-pipes 7 can be distributed along the periphery of the inner shell at equal distances from one another. Each of the through-pipes 7 has a connection 53 at the first end 5 of the pipe 1 and a connection 54 at the second end 6 of the pipe 1.

Fig. 2 diagrammatically shows a side view 20 of a first end 5 of the pipe 1. The first end 5 and the second end 6 of the pipe 1 can each be provided with a recess 21 and a projection 22, wherein the arrangement of the recess 21 and the projection 22 is such that, when assembling a pipeline section by coupling a first pipe to a second pipe, the projection 22 of the first pipe is aligned with the recess 21 of the second pipe. In this embodiment, the projection 22 and the recess 21 are arranged point-symmetrically with respect to one another relative to the centre of the cross section. These positioning means, i.e. the projections 22 and the recesses 21 at respectively the first end 5 and the second end 6 of the pipe 1, wherein the projections and recesses are arranged in a fixed position with respect to the connections 51, 52 at the first and the second end of the pipe, make it possible to use said recesses 21 and projections 22 as a reference and fit when assembling pipeline sections by successively coupling a second end of the first pipe to a first end of the second pipe and for assembling a pipeline from pipeline sections. Using said fit and references makes it possible to connect the through-pipes 7 and the heat exchangers 4 in a simple manner, because the orientation and position of the respective pipes and pipeline sections about an axial axis are fixed.

Various pipes can be coupled to form a pipeline section and various pipeline sections can be coupled to form a pipeline. Coupling pipes to form pipeline sections and coupling pipeline sections makes it possible to assemble a pipeline having a desired length. The connections between the pipes can be finished in a liquid-tight manner by means of an HDPE coating and can be completely filled with shrinkage-free mortar.

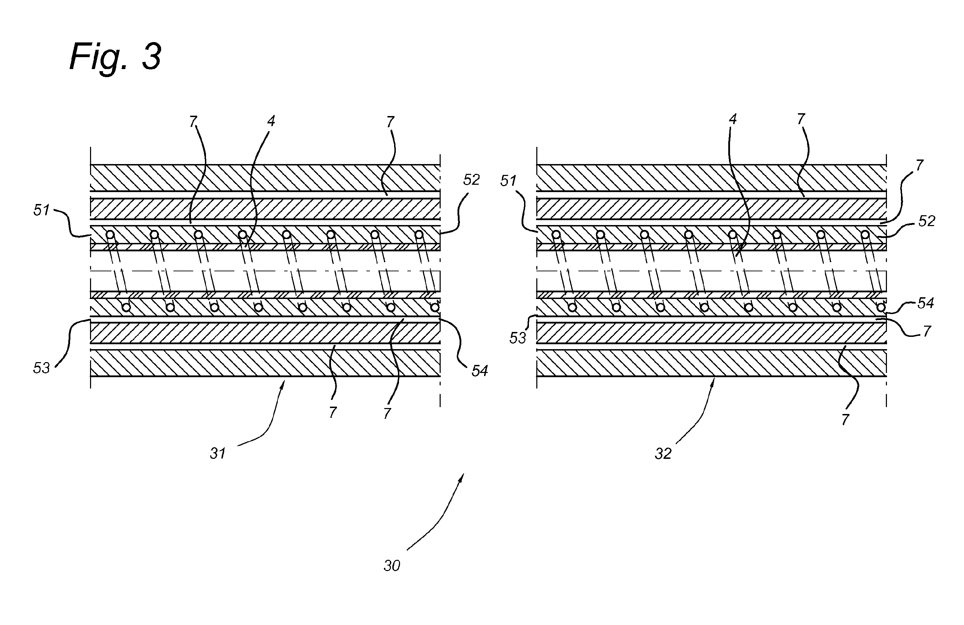

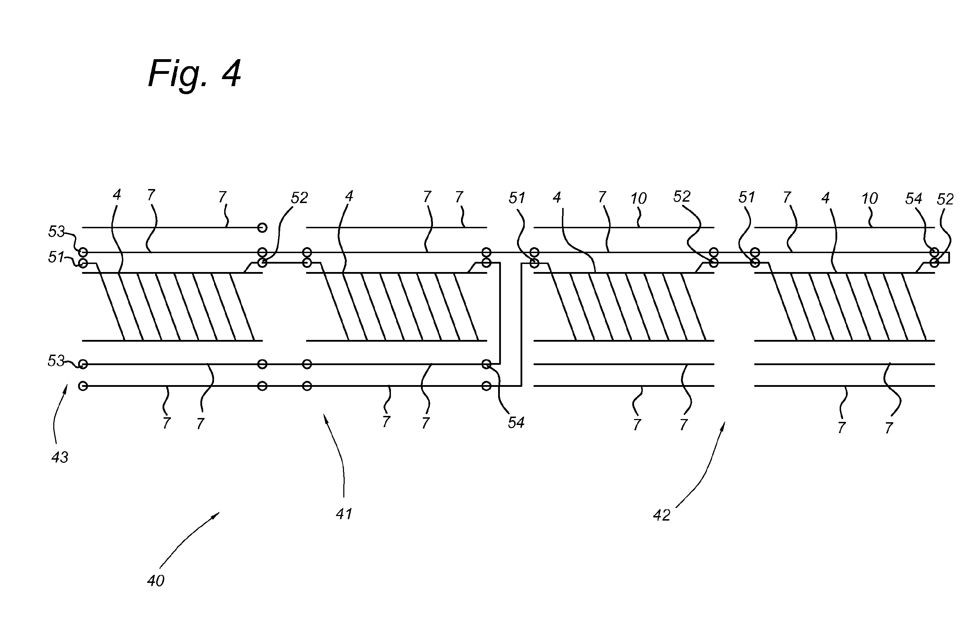

The through-pipes 7 in the pipes 1 can be used to connect the heat exchangers 4 in consecutive pipes 1 in series or in parallel with one another or to connect the heat exchangers 4 in the pipeline sections 41, 42 in series or in parallel with one another, as shown in Fig. 3 and Fig. 4.

Fig. 3 diagrammatically shows a pipeline section 30 which comprises two pipes 31, 32 which can be connected to one another, wherein the heat exchangers 4 of respectively the first pipe 31 and the second pipe 32 can be connected to one another in series. Arranging a plurality of through-pipes 7 in the pipes 1 makes it possible in this manner to connect the heat exchangers 4 in the pipes 31, 32 of the pipeline section 30 in series or in parallel with one another.

In practice, a series connection of three heat exchangers 4 in three consecutive pipes 1 in a pipeline section 30 appears to be an advantageous option. In this way, using pipes which are each 3.30 m long, it is possible to construct a pipeline section of approximately 10 meters in length.

Fig. 4 diagrammatically shows a pipeline 40 comprising two pipeline sections 41, 42, each of which is identical to the pipeline section 30 described in relation to Fig. 3, wherein a first pipeline section 41 is connected to a second pipeline section 42. In said pipeline 40, the heat exchangers 4 in the pipeline section 41 are connected in parallel with the heat exchangers in the pipeline section 42.

When laying the pipeline, it is possible to access the connection points of the pipeline, the through-pipes 7 and the heat exchangers 4 of the pipeline sections 41, 42 via a service point at an open end 43 of the pipeline 40.

In an embodiment, the inner shell 2 of a pipe 1 may comprise thirty through-pipes 7 and a heat exchanger 4, for example. Three of such pipes 1 can be connected to form a pipeline section wherein the heat exchangers 4 of the respective pipes are connected in series with one another. It is then possible, for example, to connect fifteen of these pipeline sections to form a pipeline wherein the heat exchangers 4 of the respective pipeline sections are connected in parallel with one another. If the length of a pipe is 3.30 m, it is possible, according to this arrangement, to produce a pipeline of 150 meters in length.

It will be clear to those skilled in the art that the invention is not limited to what has been described here, and that several equivalent embodiments of the invention are possible.

## Claims

1. Pipes for transporting a first liquid, wherein a pipe comprises an inner shell and an outer shell which is coaxial with respect to the inner shell, wherein the inner shell of the pipe is provided with a heat exchanger for transferring heat from the first liquid in the pipe to a second liquid in the heat exchanger, wherein the heat exchanger is provided with a first connection and a second connection for transporting the second liquid.

2. Pipes according to Claim 1, wherein the interior of the inner shell is provided with a plastic coating.

3. Pipes according to either of Claims 1 and 2, wherein the plastic coating and the heat exchanger are integrated in a single plastic element.

4. Pipes according to one of Claims 1-3, wherein the plastic coating comprises HDPE.

5. Pipes according to one of Claims 1-4, wherein the inner shell of a first pipe is provided with a through-pipe for transporting the second liquid to or from a heat exchanger of a second pipe.

6. Pipes according to Claim 5, wherein the through-pipe is oriented in an axial direction of a pipe.

7. Pipes according to one of Claims 1-6, wherein the inner shell and the outer shell comprise concrete.

8. Pipes according to Claim 9, wherein the outer shell comprises a reinforcement.

9. Pipes according to one of Claims 1-9, wherein the pipes are provided with positioning means at the first end and the second end of the pipe, wherein the positioning means are arranged in a fixed position with respect to the first and the second connection for the correct connection of the pipes.

10. Pipeline section composed of pipes according to one of Claims 1-9, wherein the heat exchangers of respectively a first and a second pipe are connected in series with one another.

11. Pipeline composed of pipeline sections according to Claim 10, wherein the heat exchangers of a first pipeline section are connected in parallel with the heat exchangers of a second pipeline section.

12. Drill pipe, comprising a pipe according to one of Claims 1-9.

13. Plastic element, wherein the plastic coating and the helical plastic tube are integrated for use in a pipe according to one of Claims 1-9.

14. Device for heating or cooling provided with pipes according to one of Claims 1-9.
